# EUROPEAN PATENT SPECIFICATION

(11) **EP 2 737 562 B1**
(45) Date of publication and mention of the grant of the patent: **10.05.2017**
(21) Application number: 12745748.9
(22) Date of filing: 30.07.2012
(51) Int. Cl.: H01M 8/241, H01M 8/2485, H01M 8/0223, H01M 8/0263, H01M 8/18

(54) **FLOW BATTERY CELLS ARRANGED BETWEEN AN INLET MANIFOLD AND AN OUTLET MANIFOLD WITH SPECIFIC FLOW PATTERN**
ZWISCHEN EINEM ANSAUGVERTEILER UND EINEM AUSLASSVERTEILER MIT BESONDEREN DURCHFLUSSEIGENSCHAFTEN ANGEORDNETE FLUSSBATTERIEZELLEN
CELLULES DE BATTERIES À FLUX AGENCÉES ENTRE UN COLLECTEUR D'ENTRÉE ET UN COLLECTEUR DE SORTIE À CONFIGURATION DE FLUX SPÉCIFIQUE

(30) Priority: 29.07.2011 US 201113194486
(43) Date of publication of application: 04.06.2014
(73) Proprietor: United Technologies Corporation, Farmington, CT 06032 (US)
(72) Inventor: PERRY, Michael L., Glastonbury, Connecticut 06033 (US); PANDY, Arun, Manchester, Connecticut 06042 (US); DING, Jinlei, Shanghai 201204 (CN)
(74) Representative: Hull, James Edward
(86) International application number: PCT/US2012/048846
(87) International publication number: WO 2013/019724

(56) References cited:
- US-A1- 2008 274 393
- OEDEGAARD ET AL: "Characterisation of direct methanol fuel cells under near-ambient conditions", JOURNAL OF POWER SOURCES, ELSEVIER SA, CH, vol. 157, no. 1, 19 June 2006 (2006-06-19) , pages 244-252, XP027937790, ISSN: 0378-7753 [retrieved on 2006-06-19]
- MERIDA W R ET AL: "Non-planar architecture for proton exchange membrane fuel cells", JOURNAL OF POWER SOURCES, ELSEVIER SA, CH, vol. 102, no. 1-2, 1 December 2001 (2001-12-01), pages 178-185, XP004331035, ISSN: 0378-7753, DOI: 10.1016/S0378-7753(01)00818-7

## Description

### BACKGROUND

This disclosure relates generally to a flow battery and, more particularly, to a flow battery having one or more flow battery cells arranged between an inlet manifold and an outlet manifold.

A typical flow battery system includes a flow battery stack, an anolyte reservoir and a catholyte reservoir. An anolyte solution is circulated between the anolyte reservoir and the flow battery stack. A catholyte solution is circulated between the catholyte reservoir and the flow battery stack.

The flow battery stack may include a relatively large number of (e.g., greater that one hundred) flow battery cells. The flow battery cells may be serially connected to increase power and voltage of the flow battery system. The anolyte and catholyte solutions typically flow in relatively long and parallel paths through the cells. Electrical shunt currents may be induced within the solutions where, for example, adjacent flow battery cells have different electrical potentials. Such shunt currents may reduce efficiency of the flow battery system.

According to the present invention, there is provided a flow battery stack system as claimed in claim 1.

### BRIEF DESCRIPTION OF THE DRAWINGS

FIG. 1 illustrates an exploded view flow battery stack;
FIG. 2 illustrates a first plate surface of a first manifold plate;
FIG. 3 illustrates a second plate surface of the first manifold plate illustrated in FIG. 2;
FIG. 4 illustrates a first plate surface of a second manifold plate;
FIG 5 illustrates a second plate surface of the second manifold plate illustrated in FIG. 4; and
FIG. 6 illustrates a plurality of flow battery cells that are separated by a bipolar plate.

### DETAILED DESCRIPTION

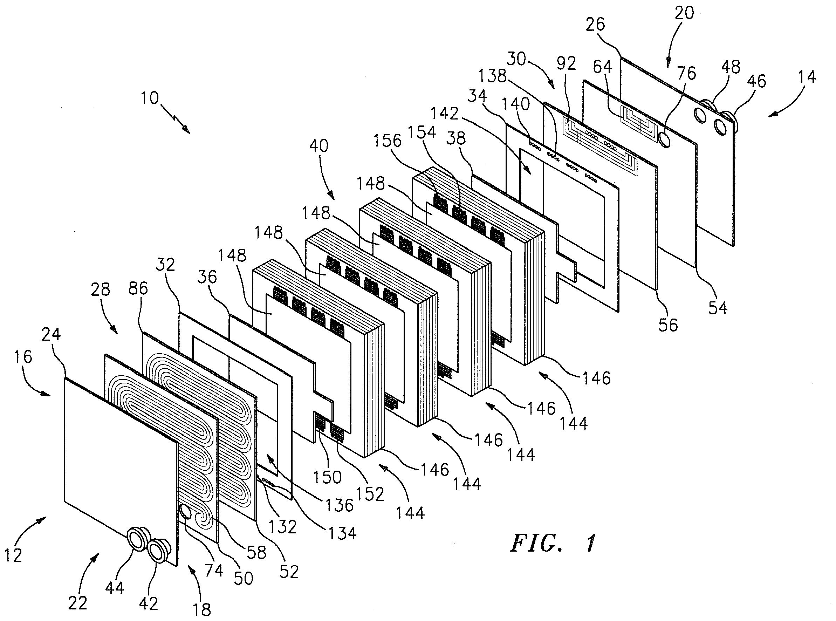

FIG. 1 illustrates a flow battery stack system 10. The flow battery stack system 10 extends longitudinally between an inlet end 12 and an outlet end 14. The flow battery stack system 10 extends laterally between a first side 16 and a second side 18. The flow battery stack system 10 extends vertically between a third side 20 (e.g., a top side) and a fourth side 22 (e.g., a bottom side). The flow battery stack system 10 includes an inlet cover plate 24, an outlet cover plate 26, an inlet manifold 28, an outlet manifold 30, an inlet frame plate 32, and outlet frame plate 34, a first current collector 36, a second current collector 38, and a flow battery cell stack 40.

The inlet cover plate 24 includes a first solution inlet 42 and a second solution inlet 44. The first and second solution inlets 42 and 44 extend longitudinally through the inlet cover plate 24.

The outlet cover plate 26 includes a first solution outlet 46 and a second solution outlet 48. The first and second solution outlets 46 and 48 extend longitudinally through the outlet cover plate 26.

The inlet manifold 28 includes an inlet first manifold plate 50 and an inlet second manifold plate 52. The outlet manifold 30 includes an outlet first manifold plate 54 and an outlet second manifold plate 56.

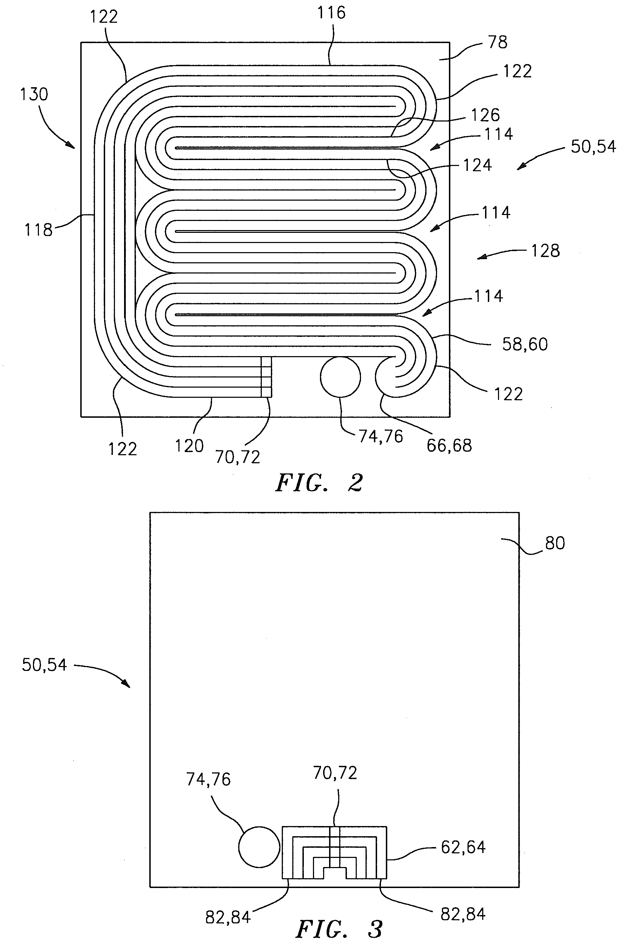

FIG. 2 illustrates a first plate surface of the first manifold plates 50 and 54. FIG. 3 illustrates a second plate surface of the first manifold plates 50 and 54 illustrated in FIG. 2. Referring to FIGS. 2 and 3, each of the inlet and outlet first manifold plates 50, 54 includes one or more inlet / outlet first passages 58, 60, one or more first distribution passages 62, 64, a first solution well 66, 68, one or more first solution flow apertures 70, 72, and a second solution flow aperture 74, 76, respectively. The first passages 58, 60 are disposed on a first plate surface 78 (see FIG. 2), and serpentine and extend from the first solution well 66, 68 to the first solution flow apertures 70, 72. The apertures 74, 76 extend longitudinally through the manifold plate 50, 54, respectively. The first distribution passages 62, 64 are disposed on a second plate surface 80 (see FIG. 3), and extend from the first solution flow apertures 70, 72 to respective second ends 82, 84 thereof.

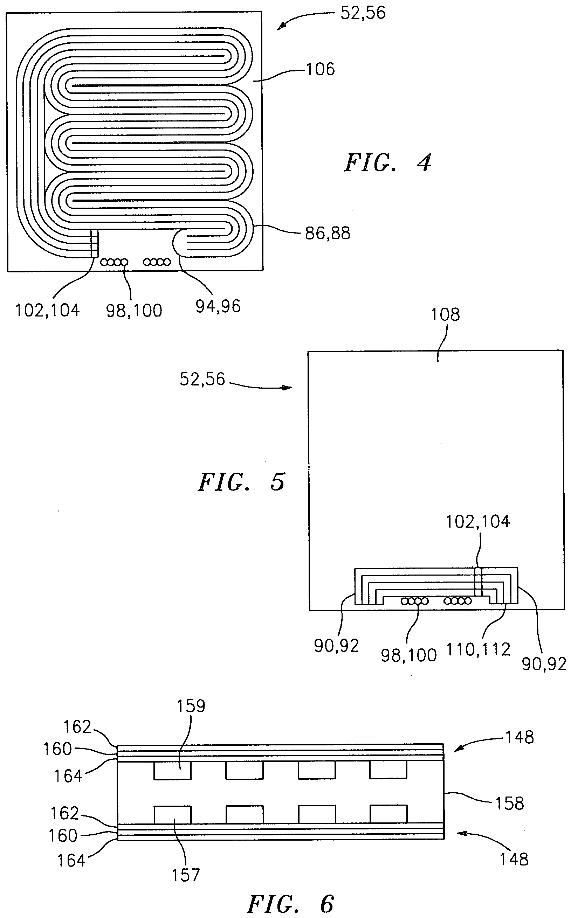

FIG. 4 illustrates a first plate surface of the second manifold plates 52 and 56. FIG. 5 illustrates a second plate surface of the second manifold plates 52 and 56 illustrated in FIG. 4. Referring to FIGS. 4 and 5, each of the inlet and outlet second manifold plates 52, 56 includes one or more inlet / outlet second passages 86, 88, one or more second distribution passages 90, 92, a second solution well 94, 96, one or more first solution flow apertures 98, 100, and one or more second solution flow apertures 102, 104, respectively. The second passages 86, 88 are disposed on a first plate surface 106 (see FIG. 4), and serpentine and extend from the second solution well 94, 96 to the second solution flow apertures 102, 104. The second solution flow apertures 102, 104 extend longitudinally through the second manifold plate 52, 56. The second distribution passages 90, 92 are disposed on a second plate surface 108 (see FIG. 5), and extend from the second solution flow apertures 102, 104 to respective second ends 110, 112 thereof. The first solution flow apertures 98, 100 extend longitudinally through the second manifold plate 52, 56.

Referring to FIGS. 2 and 4, the first passages 58, 60 and/or the second passages 86, 88 maybe arranged in a parallel and tortuous (e.g., serpentine) configuration. For ease of description, the configuration of the first and second passages will be described below with reference to the first passages 58 illustrated in FIG. 2.

Referring to FIG. 2, the tortuous configuration of the first passages 58 is designed to reduce shunt current losses within the flow battery stack system 10. Each of the first passages 58 may include, for example, a plurality of passage segments 114-122 that may be serially connected to provide the respective first passage 58 with a relatively long length for increasing (e.g., maximizing) its resistance to shunt currents.

The passage segments 114-122 may have straight, arced, bent, curved, spiraled and/or twisted geometries. In the embodiment illustrated in FIG. 2, for example, the passage segments include a plurality of counter-flow passage segments 114, a plurality of substantially straight passage segments 116, 118 and 120, and a plurality of curved passage segments 122. Each counter-flow passage segment 114 includes a first passage segment 124 and a second passage segment 126. The first passage segment 124 is connected to the second passage segment 126 such that a solution flows through the first passage segment 124 in a first direction, and through the second passage segment 126 in a second direction that is substantially opposite to the first direction. The straight passage segments include a plurality of laterally extending passage segments 116 and 120, and a vertically extending passage segment 118.

The passage segments 114-122 may also be configured to form a plurality of flow regions 128 and 130 within the first passage 58. In the embodiment illustrated in FIG. 2, for example, each of the counter-flow and laterally extending passage segments 114, 116 and 120 is configured having a first passage width. The vertically extending passage segment 118 is configured having a second passage width that is less than the first passage width. The vertically extending passage segment 118 induces a greater flow rate and pressure drop (per unit length) than the counter-flow and laterally extending passage segments 114, 116 and 120 since the second passage width is less than the first passage width. Thus, the counter-flow and laterally extending passage segments 114, 116 and 120 form a first flow region 128, and the vertically extending passage segment 118 forms a second flow region 130.

The passage segments 114-122 may also be configured to direct a solution flowing through the first passage 58 to the vertically extending passage segment 118. In such a configuration, gas entrained in the solution may stagnate proximate a connection between the vertically extending passage segment 118 and the laterally extending passage segment 116, where the entrained gas rises through the solution faster than the solution flows down the vertically extending passage segment 118. Gas stagnation may be reduced or prevented, however, by selecting the second passage width such that the flow rate and pressure drop induced in the second flow region 130 are large enough to force the entrained gas down through the vertically extending passage segment 118 against buoyancy. In this manner, the relatively high flow rate and pressure induced within the second flow region 130 may increase efficiency of the flow battery stack system 10.

Referring again to FIG. 1, the inlet frame plate 32 includes one or more first inlet apertures 132, one or more second inlet apertures 134, and a central aperture 136. The first and the second inlet apertures 132 and 134 may be disposed adjacent the fourth side 22, and extend longitudinally through the inlet frame plate 32. The central aperture 136 extends longitudinally through the inlet frame plate 32.

The outlet frame plate 34 includes one or more first outlet apertures 138, one or more second outlet apertures 140, and a central aperture 142. The first and the second outlet apertures 138 and 140 may be disposed adjacent the third side 20, and extend longitudinally through the outlet frame plate 34. The central aperture 142 extends longitudinally through the outlet frame plate 34.

The flow battery cell stack 40 includes one or more flow battery cell sub-stacks 144. Each flow battery cell sub-stack 144 includes a sub-stack frame 146 and a plurality of flow battery cells 148.

The sub-stack frame 146 includes one or more first inlet apertures 150, one or more second inlet apertures 152, one or more first outlet apertures 154 and one or more second outlet apertures 156. An example of such a sub-stack frame is disclosed in U.S. Patent No. 7,682,728.

FIG. 6 illustrates a plurality of flow battery cells 148 that are separated by a bipolar plate 158. Each flow battery cell 148 includes a separator 160 disposed between a first electrode layer 162 and a second electrode layer 164. The separator 160 maybe an ion-exchange membrane. The first and the second electrode layers 162 and 164 may be liquid-porous electrode layers. Examples of a bipolar plate, separator and electrode layers are disclosed in PCT/US09/68681, and U.S. Patent Application Serial Nos. 13/084,156 and 13/023,101.

Referring to FIGS. 1 and 6, the first electrode layers 162 are arranged in fluid communication with a first flow path that extends through channels 157 in the bipolar plate 158 between the first inlet apertures 150 and the first outlet apertures 154. The second electrode layers 164 are arranged in fluid communication with a second flow path that extends through channels 159 in the bipolar plate 158 between the second inlet apertures 152 and the second outlet apertures 156.

Referring to FIG. 1, in an assembled flow battery stack configuration (not shown), the flow battery cell sub-stacks 144 are mated together to form the flow battery cell stack 40. The first current collector 36 is positioned in the central aperture 136, and is electrically connected to the flow battery cell stack 40. The second current collector 38 is positioned in the central aperture 142, and is electrically connected to the flow battery cell stack 40.

The inlet frame plate 32 is mated with the flow battery cell stack 40 such that the first inlet apertures 132 are connected to the first inlet apertures 150, and the second inlet apertures 134 are connected to the second inlet apertures 152. The outlet frame plate 34 is mated with the flow battery cell stack 40 such that the first outlet apertures 138 are connected to the first outlet apertures 154, and the second outlet apertures 140 are connected to the second outlet apertures 156.

Referring to FIGS. 1-5, the inlet first manifold plate 50 is mated with the inlet second manifold plate 52 such that the second ends 82 of the first distribution passages 62 are connected to the first solution flow apertures 98, and the second solution flow aperture 74 is connected to the second solution well 94. The outlet first manifold plate 54 is mated with the outlet second manifold plate 56 such that the second ends 84 of the first distribution passages 64 are connected to the first solution flow apertures 100, and the second solution flow aperture 76 is connected to the second solution well 96.

The inlet manifold 28 is mated with the inlet frame plate 32 such that the first solution flow apertures 98 are connected to the first inlet apertures 132, and the second ends 110 of the second distribution passages 90 are connected to the second inlet apertures 134. The outlet manifold 30 is mated with the outlet frame plate 34 such that the first solution flow apertures 100 are connected to the first outlet apertures 138, and the second ends 112 of the second distribution passages 92 are connected to the second outlet apertures 140. In this manner, the flow battery cells 148 are connected axially between the inlet and outlet manifolds 28 and 30.

The inlet cover plate 24 is mated with the inlet manifold 28 such that the first solution inlet 42 is connected to the first solution well 66, and the second solution inlet 44 is connected to the second solution flow aperture 74. The outlet cover plate 26 is mated with the outlet manifold 30 such that the first solution outlet 46 is connected to the first solution well 68, and the second solution outlet 48 is connected to the second solution flow aperture 76.

Referring to FIG. 1, during operation, a first solution (e.g., a vanadium anolyte) having a first reversible reduction-oxidation ("redox") couple reactant (e.g., V²⁺ and/or V³⁺ ions) is directed through the first solution inlet 42 and into the tortuous inlet first passages 58 of the inlet manifold 28. The inlet manifold 28 directs the first solution into the flow battery cells 148 through the inlet frame plate 32. The first solution passes through the channels 157 in the bipolar plate 158 adjacent to the first electrode layers 162, and wets the first electrode layers 162 (see FIG. 6). The first solution, for example, can be forced through the first electrode layers 162 via an interdigitated-type flow field, or simply contact a surface of the electrode layers 162. The first solution is subsequently directed into the tortuous first passages 60 of the outlet manifold 30 through the outlet frame plate 34. The outlet manifold 30 directs the first solution out of the flow battery stack system 10 through the first solution outlet 46.

A second solution (e.g., a vanadium catholyte) having a second reversible redox couple reactant (e.g., V⁴⁺ and/or V⁵⁺ ions) is directed through the second solution inlet 44 and into the tortuous inlet second passages 86 of the inlet manifold 28. The inlet manifold 28 directs the second solution into the flow battery cells 148 through the inlet frame plate 32. The second solution passes through the channels 159 in the bipolar plate 158 adjacent to the second electrode layers 164, and wets the second electrode layers 164 (see FIG. 6). The second solution, for example, can be forced through the second electrode layers 164 via an interdigitated-type flow field, or simply contact a surface of the electrode layers 164. The second solution is subsequently directed into the tortuous second passages 88 of the outlet manifold 30 through the outlet frame plate 34. The outlet manifold 30 directs the second solution out of the flow battery stack system 10 through the second solution outlet 48.

During an energy storage mode of operation, an electrical current received by the current collectors 36 and 38 (see FIG. 1) is converted to chemical energy. The conversion process occurs through electrochemical reactions in the first solution and the second solution, and a transfer of non-redox couple reactants (e.g., H⁺ ions) from the first solution to the second solution across each of the flow battery cells 148 and, in particular, each of the separators 160 (see FIG. 6). The chemical energy is then stored in the first solution and the second solution, which may be respectively stored in first and second reservoirs (not shown). During an energy discharge mode of operation, the chemical energy stored in the first and second solutions is converted to electrical current through reverse electrochemical reactions in the first solution and the second solution, and the transfer of the non-redox couple reactants from the second solution to the first solution across each of the flow battery cells 148. The electrical current is then output from the flow battery stack system 10 through the current collectors 36 and 38.

In an alternate embodiment, the first and second passages may be disposed on opposite sides of a manifold plate.

In another alternate embodiment, the first and second passages in one of the inlet and outlet manifolds may have a substantially non-tortuous configuration.

In some embodiments, the manifold plates 50, 52, 54, and 56, the sub-stack frames 146, and/or the frame plates 32, 34 are constructed from a non-electrically conducting material (i.e., an insulator) such as, for example, plastic or a plastic-composite material (e.g., fiber reinforced plastic). The material may be selected to be relatively easy to mold into the complex shapes of the aforesaid components. The material may also be selected to have a glass- transition temperature that is higher than a predetermined threshold such as a maximum operating temperature of the flow battery stack system 10; e.g., a glass transition temperature greater than approximately sixty degrees Celsius for a vanadium-redox battery. Examples of suitable materials include thermoplastics, thermosets or semi-crystalline plastics (e.g., HDPE, PEEK).

In some embodiments, at least a portion of the bipolar plate 158 (e.g., a portion of the plate contacting active areas of the adjacent flow battery cells) is constructed from a corrosion resistant, electrically-conductive material. Examples of suitable materials include carbon (e.g., graphite, etc.), or metals with corrosion resistant coatings.

In some embodiments, the first and second current collectors 36 and 38 may be constructed from a material having a relatively high electrical conductivity, and a relatively low contact resistance with an adjacent component (e.g., a bipolar plate) within the cell stack 40. The first and second current collectors 36 and 38 may be configured as, for example, gold-plated copper plates.

While various embodiments of the present flow battery stack have been disclosed, it will be apparent to those of ordinary skill in the art that many more embodiments and implementations are possible. Accordingly, the present flow battery stack is not to be restricted except in light of the attached claims.

## Claims

1. A flow battery stack system (10), comprising:
an inlet manifold (28) having a tortuous inlet first passage (58) and a tortuous inlet second passage (86);
an outlet manifold (30) having a tortuous outlet first passage (60) and a tortuous outlet second passage (88); and
a plurality of flow battery cells (148) arranged between the inlet manifold (28) and the outlet manifold (30), each flow battery cell (148) comprising a separator (160) arranged between a first electrode layer (162) and a second electrode layer (164), wherein the flow battery cells are axially connected between the inlet manifold (28) and the outlet manifold (30), and said system is configured such that a first solution comprising a first reversible redox couple reactant is directed from the inlet first passage (58) through the flow battery cells (148) to the outlet first passage (60), thereby wetting the first electrode layers (162).

2. The flow battery stack system (10) of claim 1, wherein the inlet manifold (28) comprises an inlet first manifold plate (50) and an inlet second manifold plate (52), the inlet first passage (58) is disposed with the inlet first manifold plate (50), and the inlet second passage (86) is disposed with the second manifold plate (52).

3. The flow battery stack system (10) of claim 1, wherein the outlet manifold (30) comprises an outlet first manifold plate (54) and an outlet second manifold plate (56), the outlet first passage (60) is disposed with the outlet first manifold plate (54), and the outlet second passage (88) is disposed with the outlet second manifold plate (56).

4. The flow battery stack system (10) of claim 1, wherein the inlet first passage (58) and/or the inlet second passage (86) comprises a first flow region (128) connected to a second flow region (130), and:
the second flow region (130) induces a higher flow rate or a higher pressure drop than the first flow region (130); or
the first flow region (128) comprises a first passage segment (114, 116, 120) having a first segment width, and the second flow (130) region comprises a second passage segment (118) comprising a second segment width that is less than the first segment width.

5. The flow battery stack system (10) of claim 1, wherein said system is configured such that a second solution comprising a second reversible redox couple reactant is directed from the inlet second passage (86) through the flow battery cells (148) to the outlet second passage (88), thereby wetting the second electrode layer (164).

6. The flow battery stack system (10) of claim 1, wherein the inlet first passage (58) and/or the outlet first passage (60) comprises a serpentine inlet and/or outlet first passage, and the inlet second passage (86) and/or the outlet second passage (88) comprises a serpentine inlet and/or outlet second passage.

7. The flow battery stack system (10) of claim 1, wherein the inlet first passage (58) and/or the inlet second passage (86) comprises a straight passage segment (116, 118, 120) and a curved passage segment (122).

8. The flow battery stack system (10) of claim 1, wherein the inlet first passage (58) and/or the inlet second passage (86) comprises a first passage segment (114) connected to a second passage segment (116), the first passage segment (114) directs the respective solution in a first direction, and the second passage segment (116) directs the respective solution in a second direction that is substantially opposite to the first direction.

9. The flow battery stack system (10) of claim 1, wherein the flow battery cells (148) are separated by a bipolar plate (158) and at least a portion of the bipolar plate (158) comprises a corrosion resistant, electrically conductive material that comprises carbon.

10. The flow battery stack system (10) of claim 1, wherein the inlet manifold (28) and the outlet manifold (30) each comprise a non-electrically conducting material that comprises plastic.

11. The flow battery stack system (10) of claim 1, wherein at least some of the flow battery cells (148) are configured with a sub-stack frame (146) comprising a non-electrically conducting material that comprises plastic.

12. The flow battery stack system (10) of claim 1, wherein the outlet first passage (60) and/or the outlet second passage (88) comprises a first flow region (128) connected to a second flow region (130), and the second flow region (130) induces a higher flow rate or a higher pressure drop than the first flow region (128).

13. The flow battery stack system (10) of claim 1, wherein the outlet first passage (60) and/or the outlet second passage (88) comprises a first flow region (128) connected to a second flow region (130), the first flow region (128) comprises a first passage segment (114, 116, 120) having a first segment width, and the second flow region (130) comprises a second passage segment (118) comprising a second segment width that is less than the first segment width.

14. The flow battery stack system (10) of claim 1, wherein the outlet first passage (60) and/or the outlet second passage (88) comprises a straight passage segment (116, 118, 120) and a curved passage segment (122).

15. The flow battery stack system (10) of claim 1, wherein the outlet first passage (60) and/or the outlet second passage (88) comprises a first passage segment (114) connected to a second passage segment (116), the first passage segment (114) directs the respective solution in a first direction, and the second passage segment (116) directs the respective solution in a second direction that is substantially opposite to the first direction.

## Patentansprüche

1. Flussbatterie-Stack-System (10), umfassend:
einen Einlassverteiler (28) mit einem gewundenen Einlasserstdurchlass (58) und einem gewundenen Einlasszweitdurchlass (86);
einen Auslassverteiler (30) mit einem gewundenen Auslasserstdurchlass (60) und einem gewundenen Auslasszweitdurchlass (88); und
eine Vielzahl von Flussbatteriezellen (148), die zwischen dem Einlassverteiler (28) und dem Auslassverteiler (30) angeordnet ist, wobei jede Flussbatteriezelle (148) ein zwischen einer ersten Elektrodenschicht (162) und einer zweiten Elektrodenschicht (164) angeordnetes Trennelement (160) umfasst, wobei die Flussbatteriezellen zwischen dem Einlassverteiler (28) und dem Auslassverteiler (30) axial verbunden sind und das System derart ausgelegt ist, dass eine erste Lösung, die ein erstes reversibles Redox-Paar-Reaktionsmittel umfasst, von dem Einlasserstdurchlass (58) durch die Flussbatteriezellen (148) zu dem Auslasserstdurchlass (60) geleitet wird, wodurch die ersten Elektrodenschichten (162) befeuchtet werden.

2. Flussbatterie-Stack-System (10) nach Anspruch 1, wobei der Einlassverteiler (28) eine Einlasserstverteilerplatte (50) und eine Einlasszweitverteilerplatte (52) umfasst, wobei der Einlasserstdurchlass (58) mit der Einlasserstverteilerplatte (50) angeordnet ist und der Einlasszweitdurchlass (86) mit der Zweitverteilerplatte (52) angeordnet ist.

3. Flussbatterie-Stack-System (10) nach Anspruch 1, wobei der Auslassverteiler (30) eine Auslasserstverteilerplatte (54) und eine Auslasszweitverteilerplatte (56) umfasst, wobei der Auslasserstdurchlass (60) mit der Auslasserstverteilerplatte (54) angeordnet ist und der Auslasszweitdurchlass (88) mit der Auslasszweitverteilerplatte (56) angeordnet ist.

4. Flussbatterie-Stack-System (10) nach Anspruch 1, wobei der Einlasserstdurchlass (58) und/oder der Einlasszweitdurchlass (86) eine erste Flussregion (128) umfasst, die mit einer zweiten Flussregion (130) verbunden ist, und:
die zweite Flussregion (130) eine höhere Flussrate und einen höheren Druckabfall als die erste Flussregion (130) verursacht; oder
die erste Flussregion (128) ein erstes Durchlasssegment (114, 116, 120) mit einer ersten Segmentweite umfasst und die zweite Fluss(130)-region ein zweites Durchlasssegment (118) umfasst, das eine zweite Segmentweite umfasst, die geringer als die erste Segmentweite ist.

5. Flussbatterie-Stack-System (10) nach Anspruch 1, wobei das System derart ausgelegt ist, dass eine zweite Lösung, die ein zweites reversibles Redox-Paar-Reaktionsmittel umfasst, von dem Einlasszweitdurchlass (86) durch die Flussbatteriezellen (148) zu dem Auslasszweitdurchlass (88) geleitet wird, wodurch die zweite Elektrodenschicht (164) befeuchtet wird.

6. Flussbatterie-Stack-System (10) nach Anspruch 1, wobei der Einlasserstdurchlass (58) und/oder der Auslasserstdurchlass (60) einen sich schlängelnden Einlass- und/oder Auslasserstdurchlass umfasst und der Einlasszweitdurchlass (86) und /oder der Auslasszweitdurchlass (88) einen sich schlängelnden Einlass- und/oder Auslasszweitdurchlass umfasst.

7. Flussbatterie-Stack-System (10) nach Anspruch 1, wobei der Einlasserstdurchlass (58) und/oder der Einlasszweitdurchlass (86) ein gerades Durchlasssegment (116, 118, 120) und ein gekrümmtes Durchlasssegment (122) umfasst.

8. Flussbatterie-Stack-System (10) nach Anspruch 1, wobei der Einlasserstdurchlass (58) und/oder der Einlasszweitdurchlass (86) ein mit einem zweiten Durchlasssegment (116) verbundenes erstes Durchlasssegment (114) umfasst, wobei das erste Durchlasssegment (114) die jeweilige Lösung in einer ersten Richtung leitet, und das zweite Durchlasssegment (116) die jeweilige Lösung in einer zweiten Richtung, die der ersten Richtung im Wesentlichen entgegengesetzt ist, leitet.

9. Flussbatterie-Stack-System (10) nach Anspruch 1, wobei die Flussbatteriezellen (148) durch eine Bipolarplatte (158) getrennt sind und wenigstens ein Teil der Bipolarplatte (158) ein korrosionsbeständiges, elektrisch leitendes Material umfasst, das Kohlenstoff umfasst.

10. Flussbatterie-Stack-System (10) nach Anspruch 1, wobei der Einlassverteiler (28) und der Auslassverteiler (30) jeweils ein nicht elektrisch leitendes Material umfassen, das Kunststoff umfasst.

11. Flussbatterie-Stack-System (10) nach Anspruch 1, wobei wenigstens manche der Flussbatteriezellen (148) mit einem Teilstackrahmen (146) ausgelegt sind, der ein Kunststoff umfassendes nicht elektrisch leitendes Material umfasst.

12. Flussbatterie-Stack-System (10) nach Anspruch 1, wobei der Auslasserstdurchlass (60) und/oder der Auslasszweitdurchlass (88) eine erste Flussregion (128) umfasst, die mit einer zweiten Flussregion (130) verbunden ist, und die zweite Flussregion (130) eine höhere Flussrate oder einen höheren Druckabfall als die erste Flussregion (128) verursacht.

13. Flussbatterie-Stack-System (10) nach Anspruch 1, wobei der Auslasserstdurchlass (60) und/oder der Auslasszweitdurchlass (88) eine erste Flussregion (128) umfasst, die mit einer zweiten Flussregion (130) verbunden ist, wobei die erste Flussregion (128) ein erstes Durchflusssegment (114, 116, 120) mit einer ersten Segmentweite umfasst und die zweite Flussregion (130) ein zweites Durchlasssegment (118) umfasst, welches eine zweite Segmentweite umfasst, die geringer als die erste Segmentweite ist.

14. Flussbatterie-Stack-System (10) nach Anspruch 1, wobei der Auslasserstdurchlass (60) und/oder der Auslasszweitdurchlass (88) ein gerades Durchlasssegment (116, 118, 120) und ein gekrümmtes Durchlasssegment (122) umfasst.

15. Flussbatterie-Stack-System (10) nach Anspruch 1, wobei der Auslasserstdurchlass (60) und/oder der Auslasszweitdurchlass (88) ein mit einem zweiten Durchlasssegment (116) verbundenes erstes Durchlasssegment (114) umfasst, wobei das erste Durchlasssegment (114) die jeweilige Lösung in einer ersten Richtung leitet und das zweite Durchlasssegment (116) die jeweilige Lösung in einer zweiten Richtung, die der ersten Richtung im Wesentlichen entgegengesetzt ist, leitet.

## Revendications

1. Système d'empilement de batteries à flux (10), comprenant :
un collecteur d'entrée (28) comportant un premier passage d'entrée sinueux (58) et un second passage d'entrée sinueux (86) ;
un collecteur de sortie (30) comportant un premier passage de sortie sinueux (60) et un second passage de sortie sinueux (88) ; et
une pluralité de cellules de batterie à flux (148) agencées entre le collecteur d'entrée (28) et le collecteur de sortie (30), chaque cellule de batterie à flux (148) comprenant un séparateur (160) agencé entre une première couche d'électrode (162) et une seconde couche d'électrode (164), dans lequel les cellules de batterie à flux sont axialement connectées entre le collecteur d'entre (28) et le collecteur de sortie (30), et ledit système est configuré de telle sorte qu'une première solution comprenant un premier réactif à couple redox réversible est dirigée depuis le premier passage d'entrée (58) à travers les cellules de batterie à flux (148) vers le premier passage de sortie (60), humidifiant de ce fait les premières couches d'électrode (162).

2. Système d'empilement de batteries à flux (10) selon la revendication 1, dans lequel le collecteur d'entrée (28) comprend une première plaque de collecteur d'entrée (50) et une seconde plaque de collecteur d'entrée (52), le premier passage d'entrée (58) est disposé avec la première plaque de collecteur d'entrée (50), et le second passage d'entrée (86) est disposé avec la seconde plaque de collecteur (52).

3. Système d'empilement de batteries à flux (10) selon la revendication 1, dans lequel le collecteur de sortie (30) comprend une première plaque de collecteur de sortie (54) et une seconde plaque de collecteur de sortie (56), le premier passage de sortie (60) est disposé avec la première plaque de collecteur de sortie (54), et le second passage de sortie (88) est disposé avec la seconde plaque de collecteur de sortie (56).

4. Système d'empilement de batteries à flux (10) selon la revendication 1, dans lequel le premier passage d'entre (58) et/ou le second passage d'entrée (86) comprend une première région de flux (128) connectée à une seconde région de flux (130), et :
la seconde région de flux (130) induit un débit plus élevé ou une baisse de pression plus élevée que la première région de flux (130) ; ou
la première région de flux (128) comprend un premier segment de passage (114, 116, 120) ayant une première largeur de segment, et la seconde région de flux (130) comprend un second segment de passage (118) comprenant une seconde largeur de segment qui est inférieure à la première largeur de segment.

5. Système d'empilement de batteries à flux (10) selon la revendication 1, dans lequel ledit système est configuré de telle sorte qu'une seconde solution comprenant un second réactif à couple redox réversible est dirigée depuis le second passage d'entrée (86) à travers les cellules de batterie à flux (148) vers le second passage de sortie (88), humidifiant de ce fait la seconde couche d'électrode (164).

6. Système d'empilement de batteries à flux (10) selon la revendication 1, dans lequel le premier passage d'entrée (58) et/ou le premier passage de sortie (60) comprend/comprennent un premier passage d'entrée et/ou sortie en serpentin, et le second passage d'entrée (86) et/ou le second passage de sortie (88) comprend/comprennent un second passage d'entrée et/ou sortie en serpentin.

7. Système d'empilement de batteries à flux (10) selon la revendication 1, dans lequel le premier passage d'entrée (58) et/ou le second passage d'entrée (86) comprend/comprennent un segment de passage droit (116, 118, 120) et un segment de passage incurvé (122).

8. Système d'empilement de batteries à flux (10) selon la revendication 1, dans lequel le premier passage d'entrée (58) et/ou le second passage d'entrée (86) comprend/comprennent un premier segment de passage (114) connecté à un second segment de passage (116), le premier segment de passage (114) dirigeant la solution respective dans une première direction, et le second segment de passage (116) dirigeant la solution respective dans une seconde direction qui est sensiblement opposée à la première direction.

9. Système d'empilement de batteries à flux (10) selon la revendication 1, dans lequel les cellules de batterie à flux (148) sont séparées par une plaque bipolaire (158) et au moins une partie de la plaque bipolaire (158) comprend un matériau électriquement conducteur résistant à la corrosion qui comprend du carbone.

10. Système d'empilement de batteries à flux (10) selon la revendication 1, dans lequel le collecteur d'entrée (28) et le collecteur de sortie (30) comprennent chacun un matériau non électriquement conducteur qui comprend du plastique.

11. Système d'empilement de batteries à flux (10) selon la revendication 1, dans lequel au moins certaines des cellules de batterie à flux (148) sont configurées avec un cadre de sous-empilement (146) comprenant un matériau non électriquement conducteur qui comprend du plastique.

12. Système d'empilement de batteries à flux (10) selon la revendication 1, dans lequel le premier passage de sortie (60) et/ou le second passage de sortie (88) comprend/comprennent une première région de flux (128) connectée à une seconde région de flux (130), et la seconde région de flux (130) induit un débit plus élevé ou une baisse de pression plus élevée que la première région de flux (128).

13. Système d'empilement de batteries à flux (10) selon la revendication 1, dans lequel le premier passage de sortie (60) et/ou le second passage de sortie (88) comprend/comprennent une première région de flux (128) connectée à une seconde région de flux (130), la première région de flux (128) comprend un premier segment de passage (114, 116, 120) ayant une première largeur de segment, et la seconde région de flux (130) comprend un second segment de passage (118) comprenant une seconde largeur de segment qui est inférieure à la première largeur de segment.

14. Système d'empilement de batteries à flux (10) selon la revendication 1, dans lequel le premier passage de sortie (60) et/ou le second passage de sortie (88) comprend/comprennent un segment de passage droit (116, 118, 120) et un segment de passage incurvé (122).

15. Système d'empilement de batteries à flux (10) selon la revendication 1, dans lequel le premier passage de sortie (60) et/ou le second passage de sortie (88) comprend/comprennent un premier segment de passage (114) connecté à un second segment de passage (116), le premier segment de passage (114) dirigeant la solution respective dans une première direction, et le second segment de passage (116) dirigeant la solution respective dans une seconde direction qui est sensiblement opposée à la première direction.
